# EUROPÄISCHE PATENTSCHRIFT

(11) **EP 0 812 877 B1**
(45) Veröffentlichungstag und Bekanntmachung des Hinweises auf die Patenterteilung: **08.05.2002**
(21) Anmeldenummer: 97108898.4
(22) Anmeldetag: 03.06.1997
(51) Int. Cl.: C08J 9/12, C08J 9/06

(54) **Verfahren zur Herstellung geschäumter Formteile auf der Basis von Stärke und Verwendung der Formteile**
Process for making foamed forms based on starch, and use of the forms
Procédé pour la fabircation de pièces expansées à base d'amidon, et leur utilisation

(30) Priorität: 12.06.1996 DE 19623464
(43) Veröffentlichungstag der Anmeldung: 17.12.1997
(73) Patentinhaber: Mafo Systemtechnik Dr.-Ing. A. Zacharias GmbH & Co. KG, D-83317 Teisendorf (DE)
(72) Erfinder: Schroeter, Johannes, Prof. Dr.-Ing., 83109 Grosskarolinenfeld (DE); Jäckel, Ralf, Dipl.-Ing., 83024 Rosenheim (DE)
(74) Vertreter: Haft, von Puttkamer, Berngruber, Czybulka

(56) Entgegenhaltungen:
- EP-A- 0 319 751
- EP-A- 0 667 369
- CH-A- 679 564
- CHEMICAL ABSTRACTS, vol. 98, no. 21, 23.Mai 1983 Columbus, Ohio, US; abstract no. 177691, LEE, K.H. , E.A.: "Dehydration of foamed fish (sardine)-starch paste by microwave heating" XP002057040 & HAN'GUK SUSAN HAKHOECHI, Bd. 15, Nr. 4, 1982, Seiten 283-290,
- PATENT ABSTRACTS OF JAPAN vol. 096, no. 010, 31.Oktober 1996 & JP 08 151468 A (NIPPON SYNTHETIC CHEM IND CO LTD:THE), 11.Juni 1996,

## Beschreibung

Die Erfindung bezieht sich auf ein Verfahren zur Herstellung geschäumter Formteile auf der Basis von Stärke nach dem Oberbegrift des Anspruchs 1. Sie hat auch die Verwendung dieser Formteile zum Gegenstand.

Geschäumte Formteile werden als Verpackungsmaterial verwendet, um empfindliche Werkstücke und Bauteile gegen mechanische Beanspruchung, insbesondere durch Stoß und Schlag zu schützen. Sie sind dazu an die Gestalt des Werkstücks oder Bauteils angepaßt. Dazu werden heutzutage Formteile aus geschäumten Kunststoffen, wie Polystyrol, Polyurethan oder Polyethylen verwendet. Diese Formteile weisen zwar als Verpackungsmaterial gute mechanische Eigenschaften auf. Jedoch müssen sie entweder recyclet oder durch Deponierung oder Verbrennung entsorgt werden.

Um die Entsorgung zu verbessern, sind schüttfähige Verpakkungsmaterialkörper aus biologisch abbaubaren Schaumstoffen auf der Basis von Stärke bekannt, die nach ihrer Nutzung beispielsweise kompostiert werden können. Diese schüttfähigen Körper werden durch kontinuierliche Extrusion von Strängen aus einem Stärke/Treibmittel-Gemisch und Zerkleinern der extrudierten Stränge hergestellt (vgl. DE-32 06 751 C2, DE-40 39 505 C2, DE-44 00 330 A1).

Nach CH-A-679564 wird ein Teig aus Stärke, Wasser und/oder Alkohol und einem Treibmittel in einer Rinne durch einen Mikrowellenstrahler erwärmt, der oberhalb der Rinne angeordnet ist. Als Treibmittel soll Zitronensäure verwendet werden oder ein Metallcarbonat und eine Säure, die Kohlendioxidgas bilden, wenn sie in Kontakt gebracht werden.

Nach Chemical Abstracts, Vol 98, 177691, wird ein Gemisch aus zerkleinertem Fischfleisch, Kartoffelstärke und Treibmittel extrudiert und in einem Mikrowellenofen erwärmt, um ein geschäumtes festes Produkt zu erhalten.

Nach EP-A-667369 wird ein Gemisch aus Stärke, Polyvinylalkohol und Wasser unter Erwärmung auf mehr als 150°C extrudiert. Dabei kann die Erwärmung auch mit Mikrowellenstrahlung erfolgen.

Aus EP-A-319751 geht ein Harnstoff-Formaldehyd-Harz hervor, dem unter anderem Stärke zugesetzt sein und das durch Mikrowellen verschäumt werden kann. Auch ist es bekannt, dünne Formteile aus einem Stärke/Treibmittel-Gemisch herzustellen. Das bekannte Verfahren lehnt sich an das Backen von Waffeln an. Dabei wird ein vorgefertigter Teig in ein Waffeleisen mit beheizten Formplatten gebracht, wobei sich der Teig durch Wärmeleitung erwärmt und aufschäumt. Nach diesem Verfahren beträgt die Ausbackzeit bei Formteilen mit Wandstärken von mehr als 2 mm bereits mehrere Minuten, was die Wirtschaftlichkeit begrenzt. Es ist deshalb nur für flächige Produkte, beispielsweise Schalen für Nahrungsmitteln, nicht aber für mechanisch gut schützende, dickwandige Formteile geeignet.

Aufgabe der Erfindung ist es, ein Verfahren anzugeben, mit dem dickwandige geschäumte Formteile aus Stärke auf einfache Weise hergestellt werden können.

Dies wird erfindungsgemäß durch das im Anspruch 1 gekennzeichnete Verfahren erreicht.

Zur Herstellung des Teiges werden 0,3 bis 2 Gew.-Teile, insbesondere 0,6 bis 1 Gew.-Teil Wasser pro Gewichtsteil Stärke verwendet.

Die Stärke kann ein Getreidemehl, beispielsweise aus Weizen oder Mais, Kartoffelstärke oder eine beliebige andere Stärke sein. Vorzugsweise wird unmodifizierte Stärke verwendet. Jedoch ist auch chemisch modifizierte Stärke einsetzbar.

Das Treibmittel wird dem Teig in einer Menge von 0,1 bis 5 Gew.-%, vorzugsweise 0,5 bis 2 Gew.-%, bezogen auf das Gesamtgewicht des Teigs, zugemischt. Als Treibmittel kann jedes Treibmittel eingesetzt werden, das sich bei erhöhter Temperatur, vorzugsweise im Bereich zwischen 80 und 150° C unter Treibgasbildung zersetzt. Insbesondere werden Kohlendioxid abspaltende Treibmittel eingesetzt, also insbesondere Carbonatsalze wie Ammoniumcarbonat, Natriumhydrogencarbonat oder dergleichen Backpulver.

Dem Teig wird außerdem pulverförmiger Polyvinylalkohol zugemischt. Die Teilchengröße des Polyvinylalkohols beträgt vorzugsweise 10 bis 200 µm, insbesondere 60 µm bis 80 µm. Der Polyvinylalkohol wird in einem Anteil von 1 bis 25 Gew.-%, insbesondere 5 bis 15 Gew.-%, bezogen auf das Gesamtgewicht des Teigs, zugesetzt.

Durch die Zugabe des Polyvinylalkohols werden weichere geschäumte Formteile erzeugt, die jedoch in gleicher Weise biologisch abbaubar sind, wie ein erfindungsgemäßes geschäumtes Formteil ohne Polyvinylalkoholzusatz.

Als besonders vorteilhaft hat sich ein Teig aus folgender Rohstoffmischung erwiesen.
40 - 60 Gew.-% Stärke
0,5 - 2 Gew.-% Treibmittel
5 - 20 Gew.-% Polyvinylalkohol
Rest Wasser.

Um ein Formteil mit besonders niedriger Dichte zu erhalten, können dem Teig leichte Füllstoffteilchen zugesetzt werden, die eine niedrige Absorption und Reflexion gegenüber der Mikrowellenstrahlung aufweisen, beispielsweise Flocken aus biologisch abbaubaren Kunstoffschäumen oder aus durch Extrusion hergestellten schüttfähigen Körpern aus geschäumter Stärke. Auch haben sich Mikrohohlkügelchen, z.B. aus Glas, als geeignet erwiesen.

Für die Mikrowellenstrahlung kann ein Generator mit einer Frequenz zwischen beispielsweise 1 und 10 GHz verwendet werden, beispielsweise ein üblicher industrieller 2,45 GHz Mikrowellen-Generator.

Die Mikrowellenstrahlung weist eine Strahlungsenergie von mindestens 1 kJ/kg, vorzugsweise mindestens 2 kJ/gk auf. Die Leistung der Mikrowellenstrahlung sollte mindestens 2, vorzugsweise mindestens 10 kW/kg betragen. Unterhalb von 2 kW/kg verläuft der Backprozeß im Teig nämlich so, daß das Wasser mit der Stärke überwiegend zu einem Kleister verkocht.

Oberhalb von 2 kW/kg, insbesondere oberhalb von 10 kW/kg wird die Kleisterbildung hingegen zurückgedrängt, sodaß der Teig aufgeschäumt wird.

Die Erwärmung des Teigs mit Mikrowellenstrahlung kann in einem Mikrowellenofen oder einer sonstigen Vorrichtung erfolgen, beispielsweise in einer Anlage, bei der die mit dem Teig gefüllten Formen dem Mikrowellenfeld kontinuierlich zugeführt werden. Die Form des Ofens oder entsprechende Einrichtungen sollten jedoch sicherstellen, daß die Feldstärke des Mikrowellenfeldes im Bereich der Form möglichst homogen ist.

Die Form muß aus einem für die Mikrowellenstrahlung durchlässigen Material bestehen, beispielsweise aus Glas, Keramik oder einem Kunststoff, wie Polypropylen, Polycarbonat oder einem Polyfluorkohlen(wasser)stoff, wie Teflon.

Die Form ist vorzugsweise geschlossen. Es hat sich jedoch als vorteilhaft erwiesen, die an sich geschlossene Form mit Gasaustrittsöffnungen zu versehen, aus denen der überschüssige Wasserdampf beim Erwärmen und Aufschäumen des Teigs austreten kann.

Das hergestellte Formteil kann eine beliebige Form- und Wandstärke besitzen, beispielsweise eine Wandstärke bis zu 20 cm und mehr. Die Dichte liegt im allgemeinen zwischen 0,05 und 0,4 g/cm³. Das Formteil ist insbesonders als an die Form des zu verpachenden Gegenstandes angepaßtes Verpackungsmaterial geeignet.

### Beispiel

Ein Teig wird aus folgender Mischung hergestellt:
47,7 Gew.-Teile Stärke
1 Gew.-Teil Backpulver
12,2 Gew.-Teile Polyvinylalkohol
38 Gew.-Teile Wasser.

110 g des Teigs werden in eine Glasform gegeben, die innen eine Länge von 10 cm, eine Breite von 10 cm und eine Höhe von 5 cm aufweist. Die Form wird mit einem Deckel geschlossen, der mit 4 gleichmäßig verteilten Gasaustrittsöffnungen mit einer Querschnittsfläche von 10 mm² verschlossen wird.

Die Form wird in einen Mikrowellenofen (2,45 GHz, 8 kW/kg) gegeben.

Der Teig beginnt nach ca. 10 Sekunden zu schäumen und ist nach weiteren ca. 40 Sekunden ausgebacken.

Das erhaltene quaderförmige Schaumstoffteil weist eine Dichte von 0,2 g/cm³ auf.

## Patentansprüche

1. Verfahren zur Herstellung geschäumter Formteile auf der Basis von Stärke, bei dem ein Teig aus Stärke, Wasser und einem Treibmittel unter Erwärmung durch Mikrowellenstrahlung aufgeschäumt wird, **dadurch gekennzeichnet, daß** zur Bildung des Teiges 1 Gewichtsteil der Stärke 0,3 bis 2 Gewichtsteile Wasser zugesetzt werden, das Treibmittel in einer Menge von 0,1 bis 5%, bezogen auf das Gewicht des Teiges zugemischt wird und dem Teig 1 bis 25% Polyvinylalkohol, bezogen auf das Gewicht des Teiges, zugemischt werden, wobei der Teig zur Bildung des geschäumten Formteils mit einer Mikrowellenstrahlung mit einer Strahlungsenergie von mindestens 1 kJ/kg in einer Form aus einem für Mikrowellenstrahlung durchlässigen Material erwärmt wird.

2. Verfahren nach Anspruch 1, **dadurch gekennzeichnet, daß** der Teig aus folgender Mischung besteht
40-60 Gew.-Teile Stärke
0,5-2 Gew.-Teile Treibmittel
5-20 Gew.-Teile Polyvinylalkohol
Rest Wasser.

3. Verfahren nach einem der vorstehenden Ansprüche, **dadurch gekennzeichnet, daß** dem Teig leichte Füllstoffteilchen zugemischt werden.

4. Verwendung des nach einem der Ansprüche 1 bis 3 hergestellten Formteils als Verpackungsmaterial, das an die Form des zu verpackenden Gegenstandes angepaßt ist.

## Claims

1. A method for producing foamed moldings on the basis of starch by which a paste of starch, water and a blowing agent is foamed while being heated by microwave radiation, **characterized in that** the paste is formed by adding 0.3 to 2 parts by weight of water to 1 part by weight of starch, admixing the blowing agent in an amount of 0.1 to 5 percent based on the weight of the paste, and admixing to the paste 1 to 25 percent of polyvinyl alcohol based on the weight of the paste, the foamed molding being formed while heating the paste with a microwave radiation having a radiation energy of at least 1 kilojoule per kilogram in a mold made of a material permeable to microwave radiation.

2. A method according to claim 1, **characterized in that** the paste consists of the following mixture
40-60 parts by weight of starch
0.5-2 parts by weight of blowing agent
5-20 parts by weight of polyvinyl alcohol
balance water.

3. A method according to either of the above claims, **characterized in that** light filler particles are admixed to the paste.

4. Use of the molding produced according to any of claims 1 to 3 as packaging material which is adapted to the shape of the object to be packaged.

## Revendications

1. Procédé pour la préparation de pièces moulées expansées sur la base d'amidon, dans lequel une pâte faite d'amidon, d'eau et d'un agent de gonflage est expansée sous réchauffement par un rayonnement à micro-ondes, **caractérisé en ce que** pour former la pâte, on ajoute à 1 partie en poids d'amidon 0,3 à 2 parties en poids d'eau, l'agent de gonflage est mélangé dans une quantité de 0,1 à 5 %, par rapport au poids de la pâte, et on mélange à la pâte 1 à 25 % d'alcool de polyvinyle, et pour former la pièce moulée, la pâte étant chauffée avec un rayonnement à micro-ondes avec une énergie de rayonnement d'au moins 1 kJ/kg dans un moule en un matériau qui laisse passer le rayonnement à micro-ondes.

2. Procédé selon la revendication 1, **caractérisé en ce que** la pâte est constituée par le mélange suivant :
40 à 60 parties en poids d'amidon,
0,5 à 2 parties en poids d'agent de gonflage
5 à 20 % d'alcool de polyvinyle
le reste en eau.

3. Procédé selon l'une quelconque des revendications précédentes, **caractérisé en ce qu'**on mélange à la pâte des particules légères d'une matière de charge.

4. Utilisation de la pièce moulée préparée selon l'une quelconque des revendications 1 à 3 sous forme de matériau d'emballage qui est adapté à la forme de l'objet à emballer.
